# EUROPEAN PATENT APPLICATION

(11) **EP 1 936 906 A1**
(43) Date of publication of application: **25.06.2008**
(21) Application number: 06026737.4
(22) Date of filing: 22.12.2006
(51) Int. Cl.: H04L 29/06

(54) **Method to allow a network subscriber to gain access to a communication network**

(71) Applicant: Koninklijke KPN N.V., 2516 CK The Hague (NL)
(72) Inventor: Selgert, Franklin, 2651 BL Berkel en Rodenrijs (NL)
(74) Representative: Wuyts, Koenraad Maria

(57) **Abstract**

Method to allow a network subscriber to gain access to a communication network via a network access point, the method comprising:
-providing a database containing hardware specific information that includes one or both of specific subscriber device related information of communication devices provided to the network subscribers, and network access point hardware related information;
-transmitting the hardware specific information to a network subscriber system (10), being associated with the database;
- the network subscriber system (10) executing a verification based on the received hardware specific information, utilizing the information stored in the subscriber database; and
-in the case that the verification confirms that the received hardware specific information is valid, transmitting access point login information to the communication device (1).

## Description

### FIELD

The invention relates to a method to allow a network subscriber to gain access to a communication network via a network access point.

The invention also relates to a system comprising a communication network and at least one network access point, and at least one subscriber communication device.

Communication networks having one or more local network access points, for example so called 'hotspots', are known from the prior art. In the known system, communication devices, for example mobile communicators, mobile phones, Personal Digital Assistant (PDA) devices and/or other subscriber devices, can gain access to the network (for example a telephone network, computer network, Internet) via the local network access point.

Usually, the setting up of network access via the local access point is complicated, wherein the user of the communication device has to perform various steps in order to login to the network. Also, a problem is how to verify that the user of a communication device is indeed a valid network subscriber, particularly since local access point providers can be different from general network subscriber operators.

### SUMMARY

The present invention aims to provide an improved method to allow a network subscriber to gain access to a communication network via a network access point. Particularly, the present invention aims to provide a method wherein a network subscriber can gain access to the network in a simple, efficient manner.

According to an embodiment, to this aim, the method comprises:
- providing a database containing hardware specific information that includes one or both of specific subscriber device related information of communication devices provided to the network subscribers, and network access point hardware related information;
- transmitting the hardware specific information to a network subscriber system being associated with the database;
- the network subscriber system executing a verification based on the received hardware specific information, utilizing the information stored in the subscriber database; and
- in the case that the verification confirms that the received hardware specific information is valid, transmitting access point login information to the communication device.

In this way, hardware specific information, for example unique information that has been provided to the respective hardware during the assembly and/or installation thereof, is used as a verification means in the process of allowing access to the network via the local access point. Usually, this hardware specific information can not be altered. The network subscriber system can simply check the database, for example to verify whether the received hardware specific information has been stored in the database and if so, whether that information is associated with a valid subscriber to the network. For example, the present method can be part of a provisioning process, for example to provide certain telecommunications services to a subscriber, as will be appreciated by the skilled person.

In an embodiment, in the case the verification result is true (i.e., the received hardware specific information is indeed associated with a valid subscriber to the network), the network subscriber system preferably automatically sends the access point login information to the respective communication device. For example, preferably, the access point login information is a configuration file or configuration information, that can be automatically executed by the respective communication device, or after a user confirmation to execute that file/information, resulting in configuring the communication device to have access to the network via the network access point.

Also, in an embodiment, in the case the verification result is false (i.e., the received hardware specific information is not associated with a valid subscriber to the network), the network subscriber system does not send the access point login information to the respective communication device.

Further, according to an embodiment, the subscriber communication device can transmit its device related information to the access point, wherein the access point transmits the received communication device information to the network subscriber system.

Alternatively, the access point can transmit its network access point hardware information to the subscriber communication device, wherein the communication device transmits the received network access point information to the network subscriber system.

In a further embodiment, the hardware specific information can include a unique hardware identifier. For example, at least part of the hardware device specific information can be a MAC address, a Bluetooth device address, an IEEE 1394 Extended Unique Identifier/64 (EUI-64) and/or an RF-ID code.

According to a further embodiment, the login information is being transmitted to the communication device in a message, for example an SMS, MMS or e-mail message, wherein the communication device is configured to use the login information to gain access to the network via the respective access point.

The invention also provides a system comprising a communication network and at least one network access point, and at least one subscriber communication device, the system further comprising:
- a database containing hardware specific information that includes one or both of specific subscriber device related information of the at least one communication device, and the network access point hardware related information; and
- a network subscriber system being associated with the database;
wherein the subscriber communication device can be configured to request a network access point to provide access to the network, wherein the subscriber communication device and network access point are configured to cooperate to transmit respective hardware specific information to the network subscriber system, whereby the network subscriber system is configured to execute a verification based on received hardware specific information, utilizing the information stored in the subscriber database, whereby the network subscriber system is configured to transmit access point login information to the communication device in the case that the verification confirms that the received hardware specific information is valid.

For example, the system can be specifically adapted to carry out the method according to the invention.

Also, an embodiment provides a computer program comprising computer code for performing a method according to any of the claims 1-10 when the program is being executed by a computer. For example, an embodiment can provide digital machine readable instructions, particularly software code, configured to cause a machine to carry out a method according to the invention when executed by the machine, particularly to provide a local access point according to the invention. Besides, there can be provided digital machine readable instructions, particularly software code, configured to cause a machine to provide a subscriber communication device according to the invention. Also, for example, according to an embodiment of the invention there can be provided a data carrier carrying these digital machine readable instructions.

Further advantageous embodiments of the invention are described in the dependent claims. These and other aspects of the invention will be apparent from and elucidated with reference to non-limiting embodiments described hereafter, shown in the drawings.

### BRIEF DESCRIPTION OF THE DRAWINGS

Figure 1 schematically depicts a system according to a first embodiment of the invention; and
Figure 2 schematically depicts a system according to a second embodiment of the invention.

### DETAILED DESCRIPTION

Similar or corresponding features are denoted by similar or corresponding reference signs in the present patent application.

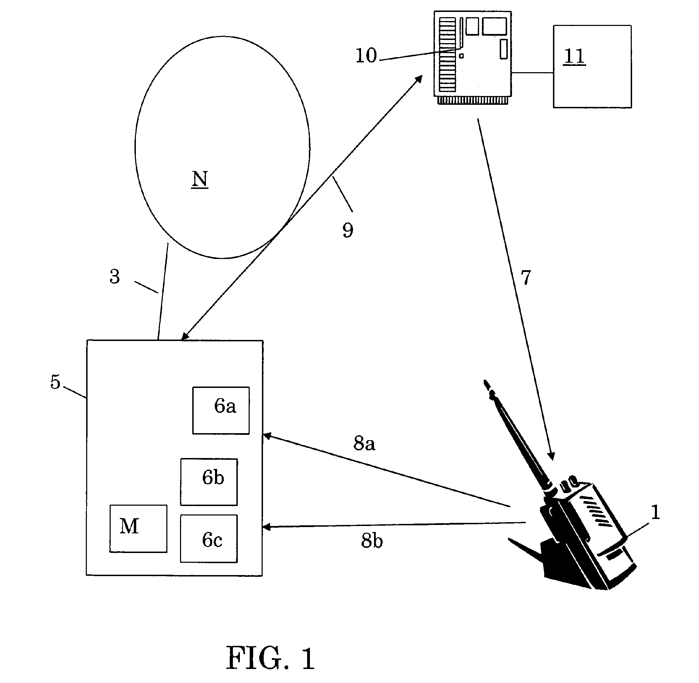

Figure 1 depicts a system comprising a communication network N and at least one network access point (only one being shown). Generally, the system can include a large number of local network access points 5, for example distributed in cities, stores, offices, public areas and other places. In an embodiment, the network is a Wide Area Network (WAN), for example the internet, or a local area network (LAN) that is associated with the local network access point 5. The local access point can be a Wifi hotspot, configured to allow multiple users to gain access to a network or network part via wireless communication means.

Each local network access point 5 can include various network communication means, and can be configured to provide communication access to the network N. The network access point 5 can include one or more processors, computers, memory device, data interfaces, network adapters, software code and/or other components to control network traffic via the access point 5, as will be appreciated by the skilled person.

Also, the system comprises network subscriber communication devices 1 (only one being shown). For example, each communication device can include one or more of: a portable device, cellular phone, laptop computer, PDA, handset and/or other subscriber communication device (terminal) 1. The communication device 1 can include one or more processors, computers, memory device, data interfaces, network adapters, software code, user interfaces (for example keyboard, touch-screen, and/ speech interface), and/or other components to control the device, as will be appreciated by the skilled person.

Both the network access point 5 and subscriber communication device 1 are configured to communicate with each other via one or more local communication links 8a, 8b can be a wireless communication link, a radiofrequency communication link, particularly an Ethernet or local area network (LAN) link, a link according to the IEEE802.11 standard, for example a Wireless Fidelity, (WIFI) communication link 8a and/or a Bluetooth communication link 8b. Alternatively, wired local communication links can be provided, for example a local USB link, firewire (IEEE 1394), wired Ethernet link. A local communication connection 8a, 8b between network access point 5 and subscriber device 1 can also be of a different configuration.

Also, there is provided at least one central network subscriber system 10 being associated with (for example including, or being communicatively connectable to) a database 11. The central network subscriber system 10 can be configured to control network subscriptions of individual users, wherein a user that has a valid subscription can be allowed to access the network N using his/her communication device 1. The database 11 can contain information regarding individual subscribers, for example subscriber names, addresses, telephone numbers, e-mail addresses, billing information, a type of network subscription relating to each user, provisioning information and/or other data. Particularly, users of communication devices 1 can be subscribed to gain access to the network N via one or more local access points 5, the respective subscription being controlled by the central network subscriber system 10. In an embodiment, the central network subscriber system will be controlled by a network subscription operator (operator backend), for example a network provider or a different operator, as will be appreciated by the skilled person. For example, the system can include various such subscriber systems, relating to the same network, to provide subscriptions to access the network.

A system having a network (internet), respective network subscriber systems, local network access points (such as hotspots) and communication devices (for example cellular phones, PDAs) as such is generally known.

According to the present invention, the system is advantageously characterised in that the database 11 contains hardware specific information that includes specific subscriber device related information of the at least one communication device 1, the information being unique for that device 1 (i.e., different subscriber devices 1 contain different exclusive device relatived information).

For example, this information can be predetermined information that has been stored in a memory (for example a non-erasable memory) of the communication device 1 (for example during manufacturing/assembly of the device 1). The device specific information can include one or more of: a unique hardware identifier, for example a device specific network adapter code, particularly a commonly known Media Access Control address (MAC address), an Extended Unique Identifier-64 (EUI-64) code, a Bluetooth device code (which is usually an 48-bit unique address), and an RF-ID code, depending on the configuration of the communication device.

For example, the communication device 1 of the subscriber can have a local network adapter part that contains an unique MAC address, or Extended Unique Identifier-64 (EUI-64). Also, the communication device 1 of the subscriber can be provided with a Bluetooth network adapter that contains a unique a Bluetooth address code. Besides, the communication device 1 can be provided with a passive or active Radiofrequency-Identification (RF-ID) tag can contains a respective unique RF-ID code. Moreover, a subscriber communication device 1 can contain only a single unique device code, for example only a MAC address, Bluetooth address or RF-ID code, or a combination or at least two of these codes and/or addresses (for example both a MAC address and Bluetooth address, both an RF-ID code and a Bluetooth address, both a MAC address and RF-ID code, and a combination of all these three mentioned examples).

The unique subscriber device information can have been stored into the database 11 during and/or as a result of a user subscription process, for example in case communication devices 1 having known unique information parts are being distributed to future subscribers, and/or by asking future subscribers to send in the unique code of their communication devices, or in a different manner, as will be appreciated by the skilled person. The storing of predetermined unique communication device information into the central database, preferably in association with other user related data (for example provisioning information, subscriber name, address, billing information, telephone number and/or a type of network subscription) can be executed, for example, by the network subscriber system 10 and/or a respective system operator.

Also, preferably, the subscriber communication device 1 can be configured to request the nearby network access point 5 to provide access to the network N, for example automatically in the case that the communication device 1 and network access point 5 make communicatively contact and/or due to a user action. Then, preferably, the subscriber communication device 1 and network access point 5 are configured to cooperate to transmit respective hardware specific information to the network subscriber system 10.

Particularly, in the embodiment of Fig. 1, the communication device 1 is configured to transmit a request to the local access point 5, for example via one of the local communication links 8a, 8b, to allow access to the network. In one embodiment, this request already contains the device related hardware information (for example one or more of: a MAC address, Bluetooth address and RF-ID code) of the communication device 1.

Alternatively, the local access point 5 can be configured to receive that request and to reply to the communication device 1 to transmit device related hardware information of the communication device 1 to the access point 5. Then, as a result of receiving that reply, the communication device 1 preferably does communicate its unique code/address information (if available) to the access point 5

After the access point has received the unique communication device information, it can information forward that information 5 to the network subscriber system 10, for example via a suitable communication link 9. As an example, the latter communication link 9 (between central system 10 and local access point 5) can be part of the network N, and/ or can be a communication connection using a different communication network. For example, as is indicated by a line 3, the local access point 5 can have a separate link to the network N, to provide access to the network N.

The network subscriber system 10 is preferably configured to execute a verification based on received hardware specific information, utilizing the information stored in the subscriber database, to allow or reject the request of the respective communication device 1. For example, the network subscriber system 10 can check whether or not the hardware specific information, received from the local access point 5, does belong to a known subscriber by accessing the content of the database 11 and if so, to which subscriber. Besides, the network subscriber system 10 can determine how the respective subscriber can be reached, preferably via a communication link 7, for example a communication link to the respective subscriber device 1 and particularly to a telephone number and/or e-mail address that relates to the subscriber (which telephone number and/or e-mail address can also be stored in the database 11).

The network subscriber system 10 is also configured to transmit access point login information to the communication device in the case that the verification confirms that the received hardware specific information is valid (i.e. relates to a valid subscriber, for example a subscriber who has a validly paid subscription for gaining access), via a suitable communication link 7, depending on the configuration of the respective communication device 1, for example via a cellular phone network link 7 (particularly to the mentioned telephone and/or e-mail address number).

For example, the network subscriber system 10 can be configured to transmit the login information to the communication device in a message (i.e. the message comprising or consisting of that information), for example an SMS, MMS or e-mail message, wherein the communication device 1 is configured to receive that message and to use the login information of the message to gain access to the network N via the respective access point 5. For example, the communication device 1 can automatically execute the received login information, or can be configured to allow a user of the device 1 to enter the login information, to login to the network N via the local access point 5.

For example, the login information can include various types of login information, for example specific login configuration information, a password, (user-) name, alphanumerical code, and/or other information. Besides, the system can be configured that a transmitted login-information can be used only once, only a limited number of times, only during a specific time period, and/or in a different manner (for example without restrictions), as will be appreciated by the skilled person. For example, login information, configured to login via a certain access point 5, can also be predetermined and/or stored in the database 11 of the subscriber system 10, to be accessed by the subscriber system 10 for transmission to subscriber communication devices 1.

Alternatively, for example, the subscriber system 10 can be configured to generate the login-information, and to transmit that information both to the respective subscriber communication device 1 and the respective access point 5 from which the subscriber communication device information originated, such that the access point 5 can allow a subscriber communication device 1 to gain access in the case that the communication device 1 can provide the same login information as the login information received by the access point 5.

In another embodiment, the subscriber system 10 can be configured to generate a first login-information part and a second login-information part that is uniquely associated with the first part, and to transmit that the first part to the respective subscriber communication device 1 and the second part to the respective access point 5 from which the subscriber communication device information originated. In that case, for example, the access point 5 can allow a subscriber communication device 1 to gain access in the case that the communication device 1 can provide a the second login information part that is associated with (for example matches to) the first part received by the access point 5.

During operation of the system of Fig. 1, a network subscriber can login, in a simple manner, via the local network access point 5, wherein the above-mentioned specific communication device information is being transmitted from his/her communication device 1 to the network access point 5, for example automatically and/or on request of the access point 5

For example, if available, one or more of an MAC address, Bluetooth identifier address and/or RF-ID code can be transmitted to the access point 5. Each of these codes/addresses can be transmitted to the access point 5 via various routes, for example via Bluetooth communication and/or via a Wifi link. In a further embodiment, for example, a Bluetooth identifier can be transmitted via Bluetooth communication 8b to a Bluetooth adapter 6b of the access point, a MAC address can be transmitted via a Wifi link 8a to a respective Wifi adapter 6a of the access point, and RF-ID can be transmitted using a suitable RF-ID reader 6c of the access point. Besides, the MAC address and/or RF-ID code can be transmitted via the Bluetooth link 8b, or the unique Bluetooth address and/or RF-ID code can be transmitted via the Wifi link 8a, if desired.

In the case that the access point 5 has received one or more of the unique device codes/addresses, it transmits the information to the network subscriber system 10 via a respective communication link 9. The network subscriber system 10 then executes a verification based on the received hardware specific information, utilizing the information stored in the subscriber database, to allow or reject the request In the case that the verification confirms that the received hardware specific information is relates to a valid subscription, the subscriber system 10 can transmit suitable access point login information to the communication device 1, to be used to login to gain access to the network N. Herein preferably, the login information is being transmitted to the communication device 1 in a message, for example an SMS, MMS or e-mail message, that can be transmitted to a respective telephone number and/or e-mail address of the respective subscriber/user.

However, in the case that the central subscriber system can not approve or authorize the request, for example in the case that a received unique communication device code can not be found in the database 11 or in that case that the received unique device code does not relate to a validly subscribed user, no login information will be transmitted. Thus, access will be denied.

Referring to Fig. 1, in a further embodiment, for example, the transmission of the hardware specific information of the subscriber device 1 to the local access point 5 can involve or be associated with a local payment, for example in the case that the subscriber device 1 is provided with an electronic wallet. As a non-limiting example, the subscriber device 1 can be a cellular RF-ID wallet (known as such from the prior art, for example in case of "RFID phone enabled payment"), wherein the respective user of the device 1 can make a payment at the access point 5 (for example to buy a product) using the RF-ID wallet 1. Herein, preferably automatically, the device RFID identifier can be transmitted to the access point 5 (for example in combination with payment related information, for example a payment specific code), to be forwarded to the central system 10 (via the communication link 9), which system 10 -as a result- can send login information to the subscriber device 1 (via the communication link 7). For example the local access point 5 can be configured to request the central system 10, to transmit the login information to the respective subscriber device 1, because of having received the payment. Thus, as a result of the local payment, the subscriber device 1 can gain access, wherein no specific payment relationship has to exist. Also, for example, the central system 10 can store received payment related information, in any, in a suitable database (for example the depicted database 11 or a different database).

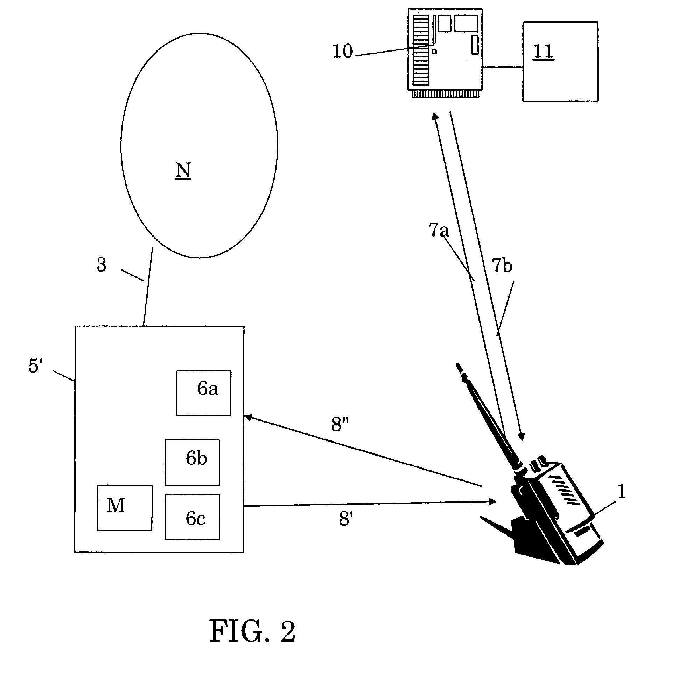

Figure 2 shows an alternative embodiment, which differs from the embodiment of Figure 1 in that a memory M of the network access point 5' holds respective hardware specific information, the information for example including one or more of: a unique hardware identifier, a MAC address, the unique Bluetooth device address, and an RF-ID code being unique to the access point 5. In this case, the communication device 1 can be configured to transmit a request to the local access point 5' to allow access to the network N, whereby the local access point 5' is configured to transmits its hardware specific information to the communication device 1. A communication connection can be provided between the central system 10 and the network N, to allow communication between that system and the network N; such connection is not depicted in Fig. 2.

In Fig. 2, during operation, for example, the communication device 1 requests the local access point 5' to allow access to the network whereby, as a result, the local access point 5' transmits its hardware specific information to the communication device 1 first (via a suitable link 8', for example by Bluetooth and/or Wifi), to be transmitted to the network subscriber system 10 by the communication device 1.

After having received the access point information, the communication device 1 forwards the received unique access point information to the central subscriber system 10 (via a suitable communication link 7a, for example in a telephone message and/or e-mail message). In this case, the database 11 can contain the hardware specific information that includes the network access point hardware related information. Again, the network subscriber system 10 can execute a verification based on the received hardware specific information, utilizing the information stored in the subscriber database, to allow or reject the access request, and, in the case that the verification confirms that the received hardware specific information is valid, transmits access point login information to the communication device 1 (via a suitable communication link 7b, for example in a telephone message and/or e-mail message). Then, the communication device 1 and access point 5' can cooperate to provide access to the network N, via suitable link 8", for example via Bluetooth and/or Wifi, there-between.

In this way, for example, a location of the communication device can be verified, using predetermined location information of the respective access point 5' that has transmitted its unique code. For example, a user communication device 1 can only be allowed access to specific access points 5' having certain predetermined locations, for example being defined or stored in the database 11. In an embodiment, no access is being allowed (i.e. no login information will be sent to the communication device 1) in the case that a user communication device 1 has transmitted the unique access point code relating to an access point for which the respective subscriber does not have a valid subscription.

The present invention can provide an improved method and system to allow a network subscriber to gain access to a communication network via a network access point, in a simple an reliable manner, for example in a substantially automated manner if desired.

Although the illustrative embodiments of the present invention have been described in greater detail with reference to the accompanying drawings, it will be understood that the invention is not limited to those embodiments. Various changes or modifications may be effected by one skilled in the art without departing from the scope or the spirit of the invention as defined in the claims.

It is to be understood that in the present application, the term "comprising" does not exclude other elements or steps. Also, each of the terms "a" and "an" does not exclude a plurality. Also, a single processor or other unit may fulfil functions of several means recited in the claims. Any reference sign(s) in the claims shall not be construed as limiting the scope of the claims.

## Claims

1. Method to allow a network subscriber to gain access to a communication network via a network access point, the method comprising:
- providing a database containing hardware specific information that includes one or both of specific subscriber device related information of communication devices provided to the network subscribers, and network access point hardware related information;
- transmitting the hardware specific information to a network subscriber system (10), being associated with the database, for example in case network access is requested by a subscriber device;
- the network subscriber system (10) executing a verification based on the received hardware specific information, utilizing the information stored in the subscriber database; and
- in the case that the verification confirms that the received hardware specific information is valid, transmitting access point login information to the communication device (1).

2. The method according to claim 1, wherein the subscriber communication device (1) transmits its device related information to the access point, wherein the access point transmits the received communication device information to the network subscriber system (10).

3. The method according to claim 1 or 2, wherein the access point transmits its network access point hardware information to the subscriber communication device, wherein the communication device transmits the received network access point information to the network subscriber system (10).

4. The method according to any of the preceding claims, wherein the hardware specific information includes a unique hardware identifier.

5. The method according to any of the preceding claims, wherein at least part of the hardware device specific information is a MAC address or an Extended Unique Identifier.

6. The method according to any of the preceding claims, wherein at least part of the hardware device specific information is a Bluetooth device address.

7. The method according to any of the preceding claims, wherein at least part of the hardware device specific information is an RF-ID code.

8. The method according to any of the preceding claims, wherein the login information is being transmitted to the communication device (1) in a message, for example an SMS, MMS or e-mail message, wherein the communication device is configured to use the login information to gain access to the network (N) via the respective access point (5).

9. The method according to any of the preceding claims, wherein the communication device (1) requests the local access point to allow access to the network whereby, as a result, the local access point (5) requests the communication device (1) to transmit its device related hardware information to the access point (5).

10. The method according to any of the preceding claims, wherein the communication device (1) requests the local access point (5) to allow access to the network whereby, as a result, the local access point (5) transmits its hardware specific information to the communication device (1), to be transmitted to the network subscriber system (10) by the communication device (1).

11. System comprising a communication network and at least one network access point, and at least one subscriber communication device (1), the system further comprising:
- a database containing hardware specific information that includes one or both of specific subscriber device related information of the at least one communication device (1), and the network access point hardware related information; and
- a network subscriber system (10) being associated with the database; wherein the subscriber communication device (1) can be configured to request a network access point to provide access to the network (N), wherein the subscriber communication device (1) and network access point are configured to cooperate to transmit respective hardware specific information to the network subscriber system (10), whereby the network subscriber system (10) is configured to execute a verification based on received hardware specific information, utilizing the information stored in the subscriber database, whereby the network subscriber system (10) is configured to transmit access point login information to the communication device in the case that the verification confirms that the received hardware specific information is valid.

12. The system according to claim 11, wherein the subscriber communication device (1) comprises a memory that holds its respective hardware specific information, the information for example including one or more of: a unique hardware identifier, a MAC address a Bluetooth device address, and an RF-ID code.

13. The system according to claim 11 or 12, wherein the network access point (5) comprises a memory that holds its respective hardware specific information, the information for example including one or more of: a unique hardware identifier, a MAC address, a Bluetooth device address, and an RF-ID code.

14. The system according to any of the preceding claims 11-13, wherein the network subscriber system (10) is configured to transmit the login information to the communication device (1) in a message, for example an SMS, MMS or e-mail message, wherein the communication device is configured to receive that message and to use the login information of the message to gain access to the network (N) via the respective access point (5).

15. The system according to any of the preceding claims 11-14, wherein the communication device (1) is configured to transmit a request to the local access point to allow access to the network, whereby the request preferably includes device related hardware information of the communication device (1), whereby the local access point (5) optionally replies to the communication device (1) to transmit device related hardware information of the communication device (1) to the access point (5) in the case that the request does not contain the device related hardware information of the communication device (1) .

16. The system according to any of the preceding claims 11-15, wherein the communication device (1) is configured to transmit a request to the local access point (5) to allow access to the network (N), whereby the local access point (5) is configured to transmits its hardware specific information to the communication device (1).

17. The system according to any of the preceding claims 11-16, whereby the local network access point and the subscriber communication device (1) are configured to communicate with each other via at least one local wireless communication link (8a, 8b).

18. The local network access point of the system according to any of the claims 11-17.

19. The communication device of the system according to any of the claims 11-17

20. A computer program comprising computer code for performing a method according to any of the claims 1-10 when the program is being executed by a computer.
